(19) Europäisches Patentamt
European Patent Office
Office européen des brevets

(11) **EP 2 955 691 B1**

(12) **EUROPÄISCHE PATENTSCHRIFT**

(45) Veröffentlichungstag und Bekanntmachung des Hinweises auf die Patenterteilung:
**09.08.2017   Patentblatt 2017/32**

(51) Int Cl.:
*G06T 5/00* (2006.01)      *G06T 3/40* (2006.01)

(21) Anmeldenummer: **14171786.8**

(22) Anmeldetag: **10.06.2014**

(54) **Vorrichtung zur Bestimmung von  Farbanteilen eines Bildpunktes einer BAYER-Matrix**

Device for determining of colour fraction of an image pixel of a BAYER matrix

Dispositif de détermination des parties de couleur d'un pixel d'une matrice BAYER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.12.2015   Patentblatt 2015/51**

(73) Patentinhaber: **Baumer Optronic GmbH**
**01454 Radeberg (DE)**

(72) Erfinder: **Schiemenz, Stefan**
**03099 Kolkwitz (DE)**

(74) Vertreter: **Strauss, Steffen**
**Baumer Innotec AG**
**Hummelstrasse 17**
**Group Intellectual Property**
**8501 Frauenfeld (CH)**

(56) Entgegenhaltungen:
• **ZHANG XINGYU ET AL: "Joint Denoising and demosaicking of noisy CFA images based on inter-color correlation", 2014 IEEE INTERNATIONAL CONFERENCE ON ACOUSTICS, SPEECH AND SIGNAL PROCESSING (ICASSP), IEEE, 4. Mai 2014 (2014-05-04), Seiten 5784-5788, XP032617063, DOI: 10.1109/ICASSP.2014.6854712 [gefunden am 2014-07-11]**

• **Johannes Herwig ET AL: "Regularized Color Demosaicing via Luminance Approximation", 5th European Conference on Colour in Graphics, Imaging, and Vision and 12th International Symposium on Multispectral Colour Science 2010, CGIV 2010/MCS'10 20100614 to 20100617 Joensuu, 14. Juni 2010 (2010-06-14), Seiten 62-69, XP055154048, Gefunden im Internet: URL:http://www.is.uni-due.de/fileadmin/lit eratur/publikation/herwig10cgiv.pdf [gefunden am 2014-11-19]**

• **WONJAE LEE ET AL: "An Efficient Demosaiced Image Enhancement Method for a Low Cost Single-Chip CMOS Image Sensor", 1. Januar 2006 (2006-01-01), ADVANCES IN IMAGE AND VIDEO TECHNOLOGY LECTURE NOTES IN COMPUTER SCIENCE;;LNCS, SPRINGER, BERLIN, DE, PAGE(S) 1234 - 1243, XP019052897, ISBN: 978-3-540-68297-4 * Seite 4 - Seite 7; Abbildung 6 ***

• **Alexey Lukin ET AL: "An Improved Demosaicing Algorithm", Graphicon 2004, 1. Januar 2004 (2004-01-01), Seiten 1-7, XP55154745, Gefunden im Internet: URL:http://audio.rightmark.org/lukin/pub/g raphicon04demosaicing.pdf [gefunden am 2014-11-24]**

**Beschreibung**

Die vorliegende Erfindung betrifft die Bestimmung von Farbanteilen eines Bildpunktes einer Bayer-Matrix.

Eine digitale Bildkamera umfasst häufig eine Farbbildsensoranordnung, welche auf einem sogenannten Bayer-Sensors basiert. Ein Bayer-Sensor kann eine zweidimensionale Anordnung von Bildsensoren, wie Charge-Coupled Device (CCD) Sensoren, umfassen, welchen jeweils ein Farbfilter zum Filtern eines Farbkanals vorgeschaltet ist. Hierbei können die Farbkanäle unterschiedlich gewichtet sein. Häufig werden Rot-Grün-Blau (RGB) Farbfilter verwendet, wobei die Anzahl der grünen Farbfilter doppelt so hoch ist wie die Anzahl der roten oder der blauen Farbfilter. Ferner können die Farbfilter derart angeordnet werden, dass sich eine Art Schachbrettmuster ergibt. Die Farbfilter können hierzu derart angeordnet werden, dass in der zweidimensionalen Anordnung der Farbfilter jeweils eine Reihe mit abwechselnd grünen und roten Farbfiltern auf jeweils eine Reihe mit abwechselnd blauen und grünen Farbfiltern folgt. Hierbei können die Farbfilter ferner derart angeordnet werden, dass in der zweidimensionalen Anordnung der Farbfilter jeweils eine Spalte mit abwechselnd grünen und roten Farbfiltern auf jeweils eine Spalte mit abwechselnd blauen und grünen Farbfiltern folgt.

Die mittels eines Bayer-Sensors erfassten Farbbilddaten können in Form einer sogenannten Bayer-Matrix vorliegen. Hierbei umfasst jeder Bildpunkt oder Pixel der Bayer-Matrix lediglich Bildpunktdaten bezüglich eines Farbkanals. Zum Anzeigen eines Farbbildes mittels eines Anzeigeelementes, wie einer Flüssigkristallanzeige oder einer Liquid Crystal Display (LCD) Anzeige, oder zum Speichern der Farbbilddaten in einem Speicher, beispielsweise in Form einer Datei nach dem Standard Portable Network Graphics (PNG), werden jedoch häufig Bildpunktdaten bezüglich aller Farbkanäle benötigt. Zum Bestimmen der Bildpunktdaten bezüglich der fehlenden Farbkanäle kann eine Interpolation über Bildpunkte durchgeführt werden, welche den Bildpunkt umgeben. Der Artikel "Comparison of color demosaicing methods", O. Losson et al., Advances in Imaging and Electron Physics 162 (2010), S. 173-265, gibt einen Überblick über Interpolationsmethoden im Orts- und Frequenzbereich und vergleicht gängige Verfahren qualitativ.

Durch die Interpolation der Bildpunktdaten bezüglich der fehlenden Farbkanäle können Artefakte im aus den einzelnen Bildpunkten zusammengesetzten Bild, wie Farbsäume oder Treppenstufenstrukturen an schrägen Kanten, entstehen, welche von einem Betrachter als störend empfunden werden können. Zum Erhöhen der Güte der Interpolation können Bildpunktdaten aus einer großen Umgebung des Bildpunktes, beispielsweise einer $7{\times}7$ Nachbarschaft des Bildpunktes oder einer $9{\times}9$ Nachbarschaft des Bildpunktes, verwendet werden. Häufig sind Datenspeicher jedoch auf zeilenorientierte Zugriffe optimiert, so dass das Auslesen eines zweidimensionalen Speicherbereichs ineffizient sein kann. Ferner weist ein Datenspeicher mit einer hohen Speicherkapazität häufig eine vergleichsweise hohe geometrische Abmessung auf, wodurch der Datenspeicher nicht oder nur schwer an vorgegebene Anforderungen, beispielsweise eine vorgegebene verfügbare Chipfläche, angepasst werden kann. Ferner kann sich die Rechenzeit zum Bestimmen der Interpolation bei einer Vergrößerung der Umgebung des Bildpunktes erhöhen.

Der Artikel "Joint Denoising and demosaicking of noisy CFA images based on inter-color correlation" der "Hong Kong University of Science and Technology" von Zhang Xingyu und weiteren Autoren aus dem Jahr 2014 befasst sich mit digitalen Kameras, welche sowohl einen Bildsensor als auch ein Farbfilter-Array (CFA) zur Bilderfassung und Anwendung von Demosaicking zur Interpolation eines Farbbildes aufweisen.

Der Artikel "Regularized Color Demosaicing via Luminance Approximation" von Johannes Herwig und weiteren Autoren der Universität Duisburg-Essen befasst sich ebenfalls mit digitalen Kameras, welche sowohl einen Bildsensor als auch ein Farbfilter-Array (CFA) aufweisen. In dem Artikel wird vorgeschlagen zunächst durch eine Tiefpassfilterung des ursprünglichen Demosaicking-Sensorbildes ein geschätztes Luminanzbild abzuleiten.

Es ist die der Erfindung zugrundeliegende Aufgabe, ein effizientes Konzept zur Bestimmung von Farbanteilen eines Bildpunktes einer Bayer-Matrix anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche. Die vorliegende Erfindung basiert auf der Erkenntnis, dass, da das menschliche Auge Detailinformationen eines Bildes, wie Bildschärfe, Konturen, Texturen oder ein Rauschen in dem Bild, hauptsächlich aus der Luminanz der Bildpunkte des Bildes extrahiert, die Effizienz einer Bestimmung von Farbanteilen eines Bildpunktes einer Bayer-Matrix durch Verwenden einer hoch aufgelösten Interpolation bezüglich der Luminanz und einer niedrig aufgelöste Interpolation bezüglich der Chrominanz erhöht werden kann. Ferner kann die Effizienz weiter erhöht werden, indem eine weitere Filterung oder Bearbeitung des Bildes, wie eine Kantenanschärfung, lediglich bezüglich der hoch aufgelösten Luminanz durchgeführt wird. Der Anspruch 1 offenbart eine Vorrichtung zur Lösung der Aufgabe der Erfindung. Ein Bayer-Sensor kann eine zweidimensionale Anordnung von Bildsensoren umfassen, welchen jeweils ein Farbfilter zum Filtern eines Farbkanals vorgeschaltet ist. Die Farbkanäle können hierbei unterschiedlich gewichtet sein. Häufig werden Rot-Grün-Blau (RGB) Farbfilter verwendet, wobei die Anzahl der grünen Farbfilter doppelt so hoch sein kann wie die Anzahl der roten oder der blauen Farbfilter. Ferner können die Farbfilter derart angeordnet sein, dass sich eine Art Schachbrettmuster ergibt. Beispielsweise sind die Farbfilter derart angeordnet, dass in der zweidimensionalen Anordnung der Farbfilter jeweils eine Reihe mit abwechselnd grünen und roten Farbfiltern auf jeweils eine Reihe mit abwechselnd blauen und grünen Farbfiltern folgt. Hierbei können die Farbfilter ferner derart angeordnet werden, dass in der zweidimensionalen Anordnung der Farbfilter jeweils eine Spalte mit abwechselnd grünen und roten Farbfiltern auf jeweils eine Spalte mit abwechselnd blauen und grünen Farbfiltern folgt. Die mittels eines Bayer-Sensors erfassten Farbbilddaten können in Form einer sogenannten Bayer-Matrix vorliegen. Hierbei umfasst jeder Bildpunkt oder Pixel der Bayer-Matrix lediglich Bildpunktdaten bezüglich eines Farbkanals. Die Bildpunkdaten eines Bildpunktes können dem Abtastwert eines dem Bildpunkt zugeordneten Bildsensors entsprechen oder aus dem Abtastwert eines dem Bildpunkt zugeordneten Bildsensors abgeleitet werden. Ferner können die Bildpunktdaten in Form einer Bitfolge vorliegen.

Die Bayer-Matrix kann einem Color-Filter-Array (CFA) Bild oder einem Bayer-Pattern entsprechen. Ferner kann gemäß einer Ausführungsform die Bestimmung von Farbanteilen mittels der Vorrichtung für alle Bildpunkte der Bayer-Matrix durchgeführt werden. Die Bildpunkte der Bayer-Matrix, welche den Bildpunkt zumindest teilweise umgeben, können eine 5×5 Nachbarschaft oder eine 5×5 Umgebung des Bildpunktes bilden. Die 5×5 Nachbarschaft des Bildpunktes kann durch eine 5×5 Matrix dargestellt werden, wobei die Einträge der 5×5 Matrix Abtastwerte der den Bildpunkten zugeordneten Bildsensoren umfassen können oder aus den Abtastwerten der den Bildpunkten zugeordneten Bildsensoren abgeleitet werden können.

Die Bayermatrix kann in einem Speicher der Vorrichtung vorgespeichert sein. Ferner kann der Filter ausgebildet sein, die Bildpunkte der Bayer-Matrix, welche den Bildpunkt zumindest teilweise umgeben, durch Falten mit einer Filtermatrix zu filtern. Ferner kann die Filterbank ausgebildet sein, die Bildpunkte der Bayer-Matrix, welche den Bildpunkt zumindest teilweise umgeben, durch Falten mit zumindest einer Filterbankmatrix zu filtern. Der Filter und/oder die Filterbank können ferner als Tiefpassfilter ausgebildet sein.

Die jeweilige Auflösung kann eine Ortsauflösung oder eine Auflösung in einem Frequenzraum sein. Ferner kann der Luminanzschätzwert in einem hochaufgelösten Helligkeitssignal umfasst sein. Die Farbanteil-Schätzwerte können ferner in einem niedrig aufgelösten Farbsignal umfasst sein.

Der weitere Luminanzschätzwert kann ferner in einem niedrig aufgelösten Helligkeitssignal umfasst sein. Beispielsweise addiert der Prozessor die Farbanteil-Schätzwerte, um den weiteren Luminanzschätzwert zu erhalten. Eine weitere vorteilhafte Ausführungsform der Vorrichtung ist offenbart im Anspruch 2. Der Steuerwert kann in einem Steuersignal umfasst sein. Beispielsweise wird auf der Basis des Steuerwertes die Bildkantenanschärfung in homogenen Bildbereichen deaktiviert. Hierzu kann der Steuerwert ein Maß für eine Homogenität eines Bildbereiches angeben. Eine weitere vorteilhafte Ausführungsform der Vorrichtung ist offenbart im Anspruch 3. Der weitere Steuerwert kann in einem Steuersignal umfasst sein. Beispielsweise wird auf der Basis des weiteren Steuerwertes in homogenen Bildbereichen zum Bestimmen der Farbanteile des Bildpunktes der Luminanzschätzwert durch den weiteren Luminanzschätzwertes zumindest teilweise ersetzt. Hierzu kann der weitere Steuerwert ein Maß für eine Homogenität eines Bildbereiches angeben. Gemäß einer Ausführungsform kann der weitere Steuerwert mit dem Steuerwert übereinstimmen.

In einer weiteren vorteilhaften Ausführungsform der Vorrichtung bilden die Bildpunkte der Bayer-Matrix, welche den Bildpunkt zumindest teilweise umgeben, eine $(2n+1)\times(2n+1)$ Nachbarschaft des Bildpunktes, wobei n eine ganze Zahl ist. Dadurch wird der Vorteil erreicht, dass die zur Bestimmung der Farbanteile verwendeten Bildpunkte effizient ausgewählt werden können. Beispielsweise beträgt n 1, 2, 3, 4, 5 oder 6.

In einer weiteren vorteilhaften Ausführungsform der Vorrichtung ist die Vorrichtung ausgebildet mit einer Akkumulationseinrichtung zum Akkumulieren der $(2n+1)\times(2n+1)$ Nachbarschaft des Bildpunktes auf eine $(n+1)\times(n+1)$ Akkumulationsmatrix. Dadurch wird der Vorteil erreicht, dass der Rechenaufwand zur Bestimmung der Farbanteile reduziert werden kann.

Die Akkumulationseinrichtung kann einen Prozessor umfassen oder durch einen Prozessor gebildet sein. Beispielsweise umfasst die $(n+1)\times(n+1)$ Akkumulationsmatrix gemittelte Bildpunktdaten der $(2n+1)\times(2n+1)$ Nachbarschaft des Bildpunktes.

In einer weiteren vorteilhaften Ausführungsform der Vorrichtung ist der Filter zum Durchführen einer Filteroperation auf der Basis der Filtermatrix

$$YH\_5x5 = \begin{bmatrix} -56 & -512 & -928 & -512 & -56 \\ -512 & 1060 & 3152 & 1060 & -512 \\ -928 & 3152 & 8192 & 3152 & -928 \\ -512 & 1060 & 3152 & 1060 & -512 \\ -56 & -512 & -928 & -512 & -56 \end{bmatrix}$$

ausgebildet. Dadurch wird der Vorteil erreicht, dass ein effizienter Filter bereitgestellt werden kann.

Die Filteroperation kann eine Faltung von Bildpunktdaten mit der Filtermatrix umfassen.

In einer weiteren vorteilhaften Ausführungsform der Vorrichtung ist der Filter zum Durchführen einer Filteroperation auf der Basis der weiteren Filtermatrix

$$YH\_3x3 = \begin{bmatrix} 8192 & 6304 & -1856 \\ 6304 & 4240 & -2048 \\ -1856 & -2048 & -224 \end{bmatrix}$$

ausgebildet. Dadurch wird der Vorteil erreicht, dass der Rechenaufwand zum Durchführen der Filteroperation reduziert werden kann.

Die Filteroperation kann eine Faltung von akkumulierten Bildpunktdaten, beispielsweise der Akkumulationsmatrix, mit der weiteren Filtermatrix umfassen.

In einer weiteren vorteilhaften Ausführungsform der Vorrichtung ist die Filterbank zum Durchführen einer Filteroperation auf der Basis der Filterbankmatrix

$$YL\_3x3 = \begin{bmatrix} 16 & 24 & 8 \\ 24 & 36 & 12 \\ 8 & 12 & 4 \end{bmatrix}$$

ausgebildet. Dadurch wird der Vorteil erreicht, dass eine effiziente Filterbank bereitgestellt werden kann. Die Filteroperation kann eine Faltung von akkumulierten Bildpunktdaten, beispielsweise der Akkumulationsmatrix, mit der Filterbankmatrix oder aus der Filterbankmatrix separierten Matrizen umfassen.

In einer weiteren vorteilhaften Ausführungsform der Vorrichtung umfasst die Filterbank eine Multiplexereinrichtung zum farbkanalabhängigen Bestimmen der Farbanteil-Schätzwerte aus einem Ergebnis der Filterung. Dadurch wird der Vorteil erreicht, dass die Farbanteil-Schätzwerte effizient farbkanalabhängig bestimmt werden können.

Gemäß einem zweiten Aspekt der Erfindung wird die Aufgabe durch eine Bildkamera gelöst, mit einem Bayer-Sensor und einer Vorrichtung, wobei der Bayer-Sensor ausgebildet ist, Bilddaten in Form einer Bayer-Matrix zu erfassen, und wobei die Vorrichtung ausgebildet ist, Farbanteile eines Bildpunktes oder mehrerer Bildpunkte der Bayer-Matrix zu bestimmen. Dadurch wird der Vorteil erreicht, dass eine Bildkamera mit einer effizienten und kostengünstigen Vorrichtung zum Bestimmen der Farbanteile der Bildpunkte eines mit der Kamera aufgenommenen Bildes bereitgestellt werden kann.

Die Bildkamera kann ausgebildet sein, um ein optisches Bild, beispielsweise im infraroten, sichtbaren und/oder ultravioletten Wellenlängenbereich, eines Motives, wie eines Objektes oder einer Person, aufzunehmen. Die Bildkamera kann ferner eine Lichtquelle, beispielsweise im infraroten, sichtbaren und/oder ultravioletten Wellenlängenbereich, zur Beleuchtung des aufzunehmenden Motives, und/oder ein Kameraobjektiv umfassen.

Die Vorrichtung kann entsprechend der oben beschriebenen Vorrichtung zur Bestimmung von Farbanteilen eines Bildpunktes einer Bayer-Matrix ausgebildet sein.

Gemäß einem dritten Aspekt der Erfindung wird die Aufgabe durch das Verfahren des Anspruches 11 gelöst. Das Verfahren kann für alle Bildpunkte der Bayer-Matrix ausgeführt werden, um ein Bild zu erhalten. Ferner kann das Verfahren mittels eines Prozessor oder der oben beschriebenen Vorrichtung durchgeführt werden. Weitere vorteilhafte Ausführungsformen des Verfahrens werden in den Ansprüchen 12, 13 offenbart. Die Erfindung kann in Hardware und/oder Software realisiert werden. Ausführungsbeispiele der Erfindung sind in den Zeichnungen dargestellt und werden im Folgenden näher beschrieben.

Es zeigen:

Fig. 1    eine Vorrichtung zur Bestimmung von Farbanteilen eines Bildpunktes einer Bayer-Matrix gemäß einer Ausführungsform;

Fig. 2    eine Bildkamera gemäß einer Ausführungsform;

Fig. 3    ein Verfahren zur Bestimmung von Farbanteilen eines Bildpunktes einer Bayer-Matrix gemäß einer Ausführungsform;

Fig. 4    ein Verfahren zur Bestimmung von Farbanteilen eines Bildpunktes einer Bayer-Matrix gemäß einer weiteren Ausführungsform;

Fig. 5    eine Signalverarbeitungseinrichtung;

Fig. 6    eine Vorrichtung zur Bestimmung von Farbanteilen eines Bildpunktes einer Bayer-Matrix gemäß einer weiteren Ausführungsform;

Fig. 7    ein Verfahren zur Akkumulation von Bildpunkten; und

Fig. 8    ein Verfahren zum farbkanalabhängigen Bestimmen von Farbanteil-Schätzwerten.

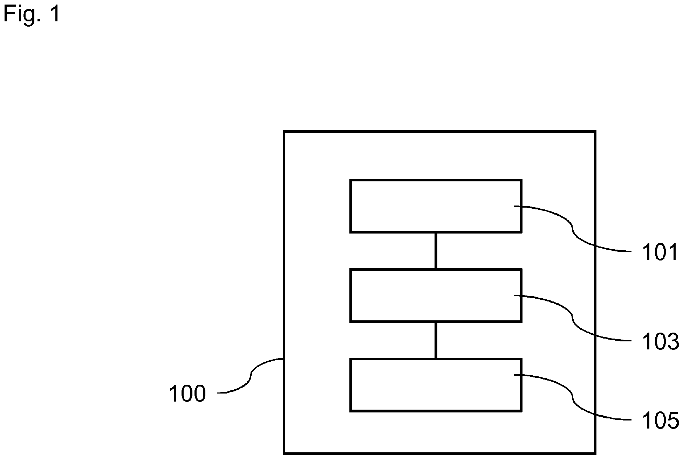

Fig. 1 zeigt eine Vorrichtung 100 zur Bestimmung von Farbanteilen eines Bildpunktes einer Bayer-Matrix gemäß einer Ausführungsform. Die Vorrichtung 100 umfasst einen Filter 101, eine Filterbank 103 und einen Prozessor 105. Gemäß einer Ausführungsform können die Farbanteile RGB-Farbanteile sein.
Die Vorrichtung 100 zur Bestimmung von Farbanteilen eines Bildpunktes einer Bayer-Matrix kann ausgebildet sein mit: dem Filter 101 zum Bestimmen eines Luminanzschätzwertes des Bildpunktes durch Filterung von Bildpunkten der Bayer-Matrix, welche den Bildpunkt zumindest teilweise umgeben, mit einer ersten Auflösung; der Filterbank 103 zum Filtern der Bildpunkte der Bayer-Matrix, welche den Bildpunkt zumindest teilweise umgeben, mit einer zweiten Auflösung, um für jeden Farbkanal einen Farbanteil-Schätzwert des Bildpunktes zu erhalten, wobei die erste Auflösung höher als die zweite Auflösung ist; und dem Prozessor 105 zum Verknüpfen der Farbanteil-Schätzwerte mit dem Luminanzschätzwert, um für jeden Farbkanal einen Farbanteil des Bildpunktes zu erhalten.
Ein Bayer-Sensor kann eine zweidimensionale Anordnung von Bildsensoren umfassen, welchen jeweils ein Farbfilter zum Filtern eines Farbkanals vorgeschaltet ist. Die Farbkanäle können hierbei unterschiedlich gewichtet sein. Häufig werden Rot-Grün-Blau (RGB) Farbfilter verwendet, wobei die Anzahl der grünen Farbfilter doppelt so hoch sein kann wie die Anzahl der roten oder der blauen Farbfilter. Ferner können die Farbfilter derart angeordnet sein, dass sich eine Art Schachbrettmuster ergibt. Beispielsweise sind die Farbfilter derart angeordnet, dass in der zweidimensionalen Anordnung der Farbfilter jeweils eine Reihe mit abwechselnd grünen und roten Farbfiltern auf jeweils eine Reihe mit abwechselnd blauen und grünen Farbfiltern folgt. Hierbei können die Farbfilter ferner derart angeordnet werden, dass in der zweidimensionalen Anordnung der Farbfilter jeweils eine Spalte mit abwechselnd grünen und roten Farbfiltern auf jeweils eine Spalte mit abwechselnd blauen und grünen Farbfiltern folgt. Die mittels eines Bayer-Sensors erfassten Farbbilddaten können in Form einer sogenannten Bayer-Matrix vorliegen. Hierbei umfasst jeder Bildpunkt oder Pixel der Bayer-Matrix lediglich Bildpunktdaten bezüglich eines Farbkanals. Die Bildpunkdaten eines Bildpunktes können dem Abtastwert eines dem Bildpunkt zugeordneten Bildsensors entsprechen oder aus dem Abtastwert eines dem Bildpunkt zugeordneten Bildsensors abgeleitet werden. Ferner können die Bildpunktdaten in Form einer Bitfolge vorliegen.
Die Bayer-Matrix kann einem Color-Filter-Array (CFA) Bild oder einem Bayer-Pattern entsprechen. Ferner kann gemäß einer Ausführungsform die Bestimmung von Farbanteilen mittels der Vorrichtung 100 für alle Bildpunkte der Bayer-Matrix durchgeführt werden. Die Bildpunkte der Bayer-Matrix, welche den Bildpunkt zumindest teilweise umgeben, können eine $5\times5$ Nachbarschaft oder eine $5\times5$ Umgebung des Bildpunktes bilden. Die $5\times5$ Nachbarschaft des Bildpunktes kann durch eine $5\times5$ Matrix dargestellt werden, wobei die Einträge der $5\times5$ Matrix Abtastwerte der den Bildpunkten zugeordneten Bildsensoren umfassen können oder aus den Abtastwerten der den Bildpunkten zugeordneten Bildsensoren abgeleitet werden können.
Die Bayermatrix kann in einem Speicher der Vorrichtung 100 vorgespeichert sein. Ferner kann der Filter 101 ausgebildet sein, die Bildpunkte der Bayer-Matrix, welche den Bildpunkt zumindest teilweise umgeben, durch Falten mit einer Filtermatrix zu filtern. Ferner kann die Filterbank 103 ausgebildet sein, die Bildpunkte der Bayer-Matrix, welche den Bildpunkt zumindest teilweise umgeben, durch Falten mit zumindest einer Filterbankmatrix zu filtern. Der Filter 101 und/oder die Filterbank 103 können ferner als Tiefpassfilter ausgebildet sein. Die jeweilige Auflösung kann eine Ortsauflösung oder eine Auflösung in einem Frequenzraum sein. Der Filter 101 kann zum Durchführen einer Tiefpassfilterung der Bilddaten der Bildpunkte der Bayer-Matrix, welche den Bildpunkt zumindest teilweise umgeben, mit einer ersten Auflösung ausgebildet sein. Ferner kann der Filter 101 zum Durchführen einer Tiefpassfilterung mittels Falten einer Matrix, welche die Bilddaten der Bildpunkte der Bayer-Matrix, welche den Bildpunkt zumindest teilweise umgeben, repräsentiert, mit einer Filtermatrix ausgebildet sein. Bilden die Bildpunkte der Bayer-Matrix, welche den Bildpunkt zumindest teilweise umgeben, beispielsweise eine $5\times5$ Nachbarschaft, so kann die Matrix, welche die Bilddaten der Bildpunkte der Bayer-Matrix, welche den Bildpunkt zumindest teilweise umgeben, repräsentiert, durch die $5\times5$ Matrix

$$\begin{bmatrix} S1 & S2 & S3 & S4 & S5 \\ S6 & S7 & S8 & S9 & S10 \\ S11 & S12 & S13 & S14 & S15 \\ S16 & S17 & S18 & S19 & S20 \\ S21 & S22 & S23 & S24 & S25 \end{bmatrix}$$

gegeben sein. Ferner kann die Filtermatrix durch die Filtermatrix

$$YH\_5x5 = \begin{bmatrix} -56 & -512 & -928 & -512 & -56 \\ -512 & 1060 & 3152 & 1060 & -512 \\ -928 & 3152 & 8192 & 3152 & -928 \\ -512 & 1060 & 3152 & 1060 & -512 \\ -56 & -512 & -928 & -512 & -56 \end{bmatrix}$$

gegeben sein, wobei YH_5x5 die Filtermatrix bezeichnet. Mittels der Faltung kann ein Luminanzschätzwert YH für den Zentralpunkt oder Zentralpixel der 5×5 Nachbarschaft bestimmt werden.

Aufgrund der Symmetrie einer Bayer-Matrix mit einer RGB-Filterung kann die Matrix, welche die Bilddaten der Bildpunkte der Bayer-Matrix, welche den Bildpunkt zumindest teilweise umgeben, repräsentiert, zu der 3×3 Akkumulationsmatrix

$$AccIm = \begin{bmatrix} 4 * S13 & 2 * S12 + 2 * S14 & 2 * S11 + 2 * S15 \\ 2 * S8 + 2 * S18 & S7 + S9 + S17 + S19 & S6 + S10 + S16 + S20 \\ 2 * S3 + 2 * S23 & S2 + S4 + S22 + S24 & S1 + S5 + S21 + S25 \end{bmatrix} * \frac{1}{4}$$

akkumuliert werden, wobei AccIm die Akkumulationsmatrix bezeichnet. Auf gleiche Weise kann die Filtermatrix YH_5x5 zu der weiteren Filtermatrix

$$YH\_3x3 = \begin{bmatrix} 8192 & 6304 & -1856 \\ 6304 & 4240 & -2048 \\ -1856 & -2048 & -224 \end{bmatrix}$$

akkumuliert werden, wobei YH_3x3 die weitere Filtermatrix bezeichnet.

Zur Reduzierung des Rechenaufwandes kann die weitere Filtermatrix ferner in mehrere einfache Matrizen aufgeteilt werden:

$$YH\_3x3 = \begin{bmatrix} 8192 & 6304 & -1856 \\ 6304 & 4240 & -2048 \\ -1856 & -2048 & -224 \end{bmatrix} \Rightarrow \begin{bmatrix} M1 = \begin{bmatrix} 1 & 1/2 & -1/8 \\ 1/2 & 1/2 & 0 \\ -1/8 & 0 & 0 \end{bmatrix} \cdot 8192 \\ M2 = \begin{bmatrix} 0 & 1/2 & -1/8 \\ 1/2 & 0 & -1/2 \\ -1/8 & -1/2 & -1/32 \end{bmatrix} \cdot 4096 \\ M3 = \begin{bmatrix} 0 & 1/2 & -1 \\ 1/2 & 1/2 & 0 \\ -1 & 0 & -1/4 \end{bmatrix} \cdot 256 \\ M4 = \begin{bmatrix} 0 & 1/2 & -1 \\ 1/2 & 1/4 & 0 \\ -1 & 0 & -1/2 \end{bmatrix} \cdot 64 \end{bmatrix}$$

Beispielsweise kann die Faltung mittels der Formel

$$YH = \sum \sum (M1 \cdot AccIm + M2 \cdot AccIm + M3 \cdot AccIm + M4 \cdot AccIm)$$

bestimmt werden, wobei YH den Luminanzschätzwert bezeichnet. Die Summation kann über alle Einträge der resultierenden Matrix durchgeführt werden, um den Luminanzschätzwert YH zu erhalten.

In dem Luminanzschätzwert YH können die Farkanäle oder die einzelnen Farbanteile mit der Gewichtung

$$YH \approx 4256 \cdot R^* + 8512 \cdot G^* + 4256 \cdot B^*$$

enthalten sein, wobei R* einen mittleren Rotanteil, G* einen mittleren Grünanteil und B* einen mittleren Blauanteil bezeichnet. Der Grünanteil trägt hierbei mit einer doppelt so hohen Gewichtung bei wie der Rotanteil oder der Blauanteil.

Die Filterbank 105 kann zum Durchführen einer Tiefpassfilterung der Bilddaten der Bildpunkte der Bayer-Matrix, welche den Bildpunkt zumindest teilweise umgeben, mit einer zweiten Auflösung ausgebildet sein. Ferner kann die Filterbank 105 zum Durchführen einer Tiefpassfilterung mittels Falten einer Matrix, welche die Bilddaten der Bildpunkte der Bayer-Matrix, welche den Bildpunkt zumindest teilweise umgeben, repräsentiert, mit einer Filterbankmatrix ausgebildet sein. Bilden die Bildpunkte der Bayer-Matrix, welche den Bildpunkt zumindest teilweise umgeben, beispielsweise eine 5×5 Nachbarschaft, so kann die Filterbankmatrix unter Ausnutzung der Symmetrie einer Bayer-Matrix mit einer RGB-Filterung zu der Matrix

$$YL\_3x3 = \begin{bmatrix} 16 & 24 & 8 \\ 24 & 36 & 12 \\ 8 & 12 & 4 \end{bmatrix}$$

akkumuliert werden, wobei YL_3x3 die Filterbankmatrix bezeichnet. Die Akkumulierung kann analog zur Bestimmung der Akkumulationsmatrix Acclm erfolgen. Die Filterbankmatrix kann ferner in die Matrizen

$$L1 = \begin{bmatrix} 16 & 0 & 8 \\ 0 & 0 & 0 \\ 8 & 0 & 4 \end{bmatrix}, L2 = \begin{bmatrix} 0 & 0 & 0 \\ 0 & 36 & 0 \\ 0 & 0 & 0 \end{bmatrix}, L3 = \begin{bmatrix} 0 & 24 & 0 \\ 0 & 0 & 0 \\ 0 & 12 & 0 \end{bmatrix} \text{ und } L4 = \begin{bmatrix} 0 & 0 & 0 \\ 24 & 0 & 12 \\ 0 & 0 & 0 \end{bmatrix}$$

separiert werden. Durch Falten der Akkumulationsmatrix Acclm mit der Matrix L1 kann ein erster Wert A1, durch Falten der Akkumulationsmatrix Acclm mit der Matrix L2 kann ein zweiter Wert A2, durch Falten der Akkumulationsmatrix Acclm mit der Matrix L3 kann ein dritter Wert A3, und durch Falten der Akkumulationsmatrix Acclm mit der Matrix L4 kann ein vierter Wert A4 bestimmt werden.

Der Prozessor 105 oder die Filterbank 103 kann ferner ausgebildet sein, in Abhängigkeit von dem Farbkanal des Bildpunktes, welcher den Zentralpunkt der 5×5 Nachbarschaft des Bildpunktes bildet, die Farbanteil-Schätzwerte zu bestimmen, beispielsweise mittels einer Multiplexereinrichtung.

Ist der Farbkanal des Bildpunktes der Farbkanal R, können die Farbanteil-Schätzwerte gegeben sein durch:

R'=A1, G'=A3+A4, und B'=A2,

wobei R' den Farbanteil-Schätzwert für den Farbkanal Rot, G' den Farbanteil-Schätzwert für den Farbkanal Grün und B' den Farbanteil-Schätzwert für den Farbkanal Blau bezeichnet.

Ist der Farbkanal des Bildpunktes ferner der Farbkanal B, können die Farbanteil-Schätzwerte gegeben sein durch:

R'=A2, G'=A3+A4, und B'=A1.

Ist der Farbkanal des Bildpunktes ferner der Farbkanal Gr, können die Farbanteil-Schätzwerte gegeben sein durch:

R'=A3, G'=A1+A2, und B'=A4.

Ist der Farbkanal des Bildpunktes ferner der Farbkanal Gb, können die Farbanteil-Schätzwerte gegeben sein durch:

R'=A4, G'=A1+A2, und B'=A3.

Die Farbanteil-Schätzwerte können ferner zu einem weiteren Luminanzschätzwert YL akkumuliert werden:

$$YL = R' + G' + B'$$

Die weitere Filtermatrix YL_3x3 kann derart gewählt werden, dass in dem weiteren Luminanzschätzwert YL die Farbkanäle mit der Gewichtung

$$YL \approx 36 * R^* + 72 * G^* + 36 * B^*$$

eingehen, wobei R* einen mittleren Rotanteil, G* einen mittleren Grünanteil und B* einen mittleren Blauanteil bezeichnet. Der Grünanteil trägt hierbei mit einer doppelt so hohen Gewichtung bei wie der Rotanteil oder der Blauanteil.

Der Prozessor 105 kann ausgebildet sein, die Farbanteile des Bildpunktes für jeden Farbkanal zu bestimmen. Da der Luminanzschätzwert YH und der weitere Luminanzschätzwert YL eine vergleichbare Gewichtung aufweisen, können durch eine Differenzbildung der jeweiligen Farbanteil-Schätzwerte R', G', B' mit dem weiteren Luminanzschätzwert YL und einer anschließenden Addition des Luminanzschätzwertes YH die Farbanteile gemäß der Formeln

$$R = 118 \cdot (4 \cdot R' - YL) + Y_x$$

$$G = 118 \cdot (2 \cdot G' - YL) + Y_x$$

$$B = 118 \cdot (4 \cdot B' - YL) + Y_x$$

bestimmt werden. Hierbei bezeichnet R den Farbanteil für den Farbkanal Rot, G den Farbanteil für den Farbkanal Grün und B den Farbanteil für den Farbkanal Blau. Ferner bezeichnet der Parameter x einen Modus des Luminanzschätzwertes YH. In dem Modus x=0 kann

$$Y_0 = YH$$

sein. Hierbei kann der Luminanzschätzwert YH unverändert zur Bestimmung der Farbanteile R, G, B verwendet werden.

Die oben geschilderte Bestimmung der Farbanteile R, G, B des Bildpunktes kann für alle Bildpunkte der Bayer-Matrix durchgeführt werden. Da das menschliche Auge Detailinformationen eines Bildes, wie Bildschärfe, Konturen, Texturen oder ein Rauschen in dem Bild, hauptsächlich aus der Luminanz der Bildpunkte des Bildes extrahiert, kann ein Bild mit einer derartigen Bestimmung der Farbanteile R, G, B der Bildpunkte von einem Betrachter als hochauflösend empfunden werden.

Gemäß einer Ausführungsform kann der weitere Luminanzschätzwert YL, welcher in den Farbanteil-Schätzwerten R', G', B' umfasst sein kann, durch den Luminanzschätzwert YH ausgetauscht werden.

Ferner kann der Luminanzschätzwert YH in einem hochaufgelöstes Helligkeitssignal umfasst sein. Der weitere Luminanzschätzwert YL kann ferner in einem niedrig aufgelösten Helligkeitssignal umfasst sein. Ferner können die Farbanteil-Schätzwerte R', G', B' in einem niedrig aufgelösten Farbsignal umfasst sein.

Der Prozessor 105 kann ferner ausgebildet sein, die Farbanteil-Schätzwerte R', G', B' zu einem weiteren Luminanzschätzwert YL zu akkumulieren und eine Differenz des Luminanzschätzwertes YH und des weiteren Luminanzschätzwertes YL mit zumindest einem Farbanteil R, G, B des Bildpunktes zu verknüpfen, um eine Bildkantenanschärfung zu bewirken.

Der Prozessor 105 kann ferner ausgebildet sein, eine Güte der Bestimmung der Farbanteile R, G, B zu erhöhen, indem eine Schärfung des Luminzschätzwertes YH durchgeführt wird. Dies kann einer Kantenanschärfung entsprechen. Hierzu können Hochfrequenzanteile des Luminanzschätzwertes YH erhöht werden. Hierbei kann ein Differenzwert des Luminanzschätzwertes YH und des weiteren Luminanzschätzwertes YL gemäß

$$Y_{diff} = YH - 118 \cdot YL$$

gebildet werden, wobei $Y_{diff}$ den Differenzwert bezeichnet. Das Erhöhen der Hochfrequenzanteile des Luminanzschätzwertes YH kann dem Modus x=1 entsprechen:

$$Y_1 = YH + \alpha \cdot Y_{diff}$$

wobei $\alpha$ einen Parameter zur Gewichtung des Differenzwertes $Y_{diff}$ bezeichnet. Beispielsweise beträgt der Parameter $\alpha$ 0,1, 0,2, 0,3, 0,4, 0,5, 0,6, 0,7, 0,8, 0,9, 1,0, 1,1, 1,2, 1,3, 1,4, 1,5, 1,6, 1,7, 1,8, 1,9 oder 2,0.

Ferner kann der Differenzwert $Y_{diff}$ in einem Differenzsignal umfasst sein.

Der Prozessor 105 kann ferner ausgebildet, auf der Basis der Farbanteil-Schätzwerte R', G', B' und des Luminanzschätzwertes YH einen Steuerwert für eine adaptive Bildkantentanschärfung zu bestimmen und durch den Steuerwert für eine adaptive Bildkantentanschärfung den Luminanzschätzwert YH mit dem weiteren Luminanzschätzwert YL zu verknüpfen, um für jeden Farbkanal einen Farbanteil R, G, B des Bildpunktes zu erhalten und um eine adaptive Bildkantentanschärfung zu bewirken.

Der Prozessor 105 kann ferner ausgebildet sein, eine Güte der Bestimmung der Farbanteile R, G, B zu erhöhen, indem eine Kantenanschärfung nur in Bildbereichen mit Detailinformationen, wie Kanten, Details oder Texturen, wirkt, während die Kantenanschärfung in einem homogenen Bildbereich unwirksam bleibt. Dadurch kann eine Verstärkung von Rauschanteilen in homogenen Bildbereichen vermieden werden. Dies kann einer adaptiven Kantenanschärfung entsprechen.

Für eine derartige adaptive oder inhaltsabhängige Kantenanschärfung kann ein Steuerwert bestimmt werden, mittels welchem homogene und detaillierte Bildbereiche unterscheidbar sind. In Abhängigkeit von einem Bildsignal kann mittels des Steuerwertes die Kantenanschärfung an und aus geschaltet werden. Um Artefakte beim Einschalten und/oder beim Ausschalten der Kantenanschärfung zu reduzieren kann in dem Modus x=2 ein weiches Überblenden zwischen Bildbereichen mittels

$$Y_2 = Y_1 \cdot MASK + YH \cdot (1 - MASK)$$

erreicht werden. Hierbei bezeichnet MASK den normierten Steuerwert, auf dessen Basis zwischen einem angeschärften Bildinhalt $Y_1$ und dem nicht angeschärften Bildinhalt mit dem Luminanzschätzwert YH übergeblendet werden kann.

Der Differenzwert $Y_{diff}$ kann gleichwertfrei sein und in homogenen Bildbereichen vergleichsweise kleine Werte annehmen. In der Umgebung von Kanten kann sich der Differenzwert $Y_{diff}$ betragsmäßig erhöhen. Damit kann sich der Differenzwert $Y_{diff}$ als Basis für einen Steuerwert MASK eignen. Der Steuerwert MASK kann gemäß der Formel $MASK = \beta \cdot |Y_{diff}|$

bestimmt werden, wobei $\beta$ einen Parameter zur Regelung der Empfindlichkeit des Steuerwertes MASK bezeichnet. Beispielsweise beträgt der Parameter $\beta$ 0,1, 0,2, 0,3, 0,4, 0,5, 0,6, 0,7, 0,8, 0,9, 1,0, 1,1, 1,2, 1,3, 1,4, 1,5, 1,6, 1,7, 1,8, 1,9 oder 2,0.

Ferner kann der Steuerwert MASK in einem Steuersignal umfasst sein.

Der Prozessor 105 kann ferner ausgebildet sein, auf der Basis der Farbanteil-Schätzwerte R', G', B' und des Luminanzschätzwertes YH einen weiteren Steuerwert für eine adaptive Bildkantentanschärfung mit einer Rauschunterdrückung zu bestimmen und durch den weiteren Steuerwert für eine adaptive Bildkantentanschärfung mit einer Rauschunterdrückung den Luminanzschätzwert YH mit dem weiteren Luminanzschätzwert YL zu verknüpfen, um für jeden Farbkanal einen Farbanteil R, G, B des Bildpunktes zu erhalten und um eine adaptive Bildkantentanschärfung mit einer Rauschunterdrückung zu bewirken.

Der weitere Steuerwert kann in einem Steuersignal umfasst sein. Ferner kann der weitere Steuerwert identisch mit dem Steuerwert MASK sein.

Der Prozessor 105 kann ferner ausgebildet sein, eine Güte der Bestimmung der Farbanteile zu erhöhen, indem in homogenen Bildbereichen der weitere Luminanzschätzwert YL zur Bestimmung der Farbanteile R, G, B verwendet wird. Dies kann in dem Modus x=3 mittels

$$Y_3 = Y_1 \cdot MASK + YL \cdot (1 - MASK)$$

erreicht werden. Im Unterschied zu dem Modus x=2 ist hierbei der Luminanzschätzwert YH durch den weiteren Luminanzschätzwert YL ersetzt.

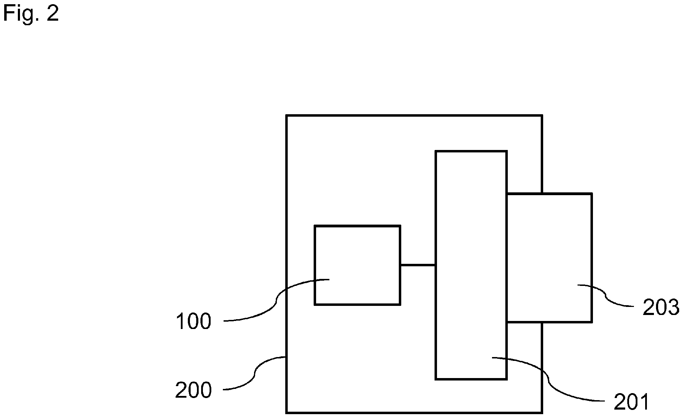

Fig. 2 zeigt eine Bildkamera 200 gemäß einer Ausführungsform. Die Bildkamera 200 umfasst eine Vorrichtung 100, einen Bayer-Sensor 201 und ein Kameraobjektiv 203.

Die Bildkamera 200 kann ausgebildet sein mit dem Bayer-Sensor 201 und der Vorrichtung 100, wobei der Bayer-Sensor 201 ausgebildet ist, Bilddaten in Form einer Bayer-Matrix zu erfassen, und wobei die Vorrichtung 100 ausgebildet ist, Farbanteile eines Bildpunktes oder mehrerer Bildpunkte der Bayer-Matrix zu bestimmen.

Die Bildkamera 200 kann ausgebildet sein, um ein optisches Bild, beispielsweise im infraroten, sichtbaren und/oder ultravioletten Wellenlängenbereich, eines Motives, wie eines Objektes oder einer Person, aufzunehmen. Die Bildkamera 200 kann ferner eine Lichtquelle, beispielsweise im infraroten, sichtbaren und/oder ultravioletten Wellenlängenbereich, zur Beleuchtung des aufzunehmenden Motives, und/oder das Kameraobjektiv 203 umfassen.

Die in der Fig. 2 abgebildete Vorrichtung 100 kann der in der Fig. 1 abgebildeten Vorrichtung 100 entsprechen.

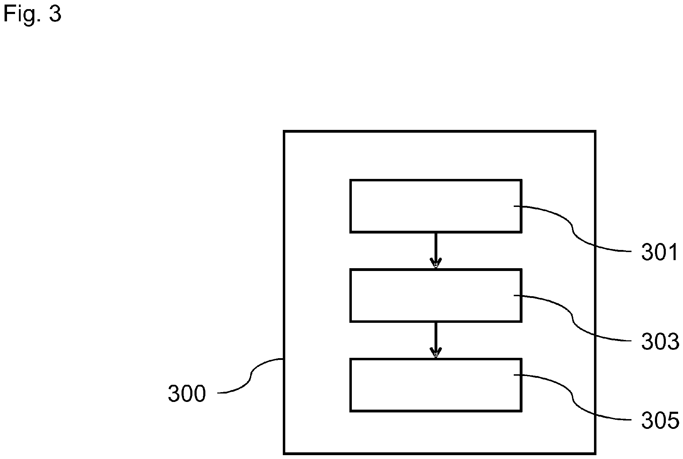

Fig. 3 zeigt ein Verfahren 300 zur Bestimmung von Farbanteilen eines Bildpunktes einer Bayer-Matrix gemäß einer Ausführungsform. Das Verfahren 300 umfasst die Verfahrensschritte eines Bestimmens 301, eines Filterns 303 und eines Verknüpfens 305.

Das Verfahren 300 zur Bestimmung von Farbanteilen eines Bildpunktes einer Bayer-Matrix kann die Verfahrensschritte umfassen: Bestimmen 301 eines Luminanzschätzwertes des Bildpunktes durch Filterung von Bildpunkten der Bayer-Matrix, welche den Bildpunkt zumindest teilweise umgeben, mit einer ersten Auflösung; Filtern 303 der Bildpunkte der Bayer-Matrix, welche den Bildpunkt zumindest teilweise umgeben, mit einer zweiten Auflösung, um für jeden Farbkanal einen Farbanteil-Schätzwert des Bildpunktes zu erhalten, wobei die erste Auflösung höher als die zweite Auflösung ist; und Verknüpfen 305 der Farbanteil-Schätzwerte mit dem Luminanzschätzwert, um für jeden Farbkanal einen Farbanteil des Bildpunktes zu erhalten.

Das Verfahren 300 kann für alle Bildpunkte der Bayer-Matrix ausgeführt werden, um ein Bild zu erhalten. Ferner kann das Verfahren 300 mittels eines Prozessor oder der oben beschriebenen Vorrichtung 100 durchgeführt werden, beispielsweise in der Bildkamera 200.

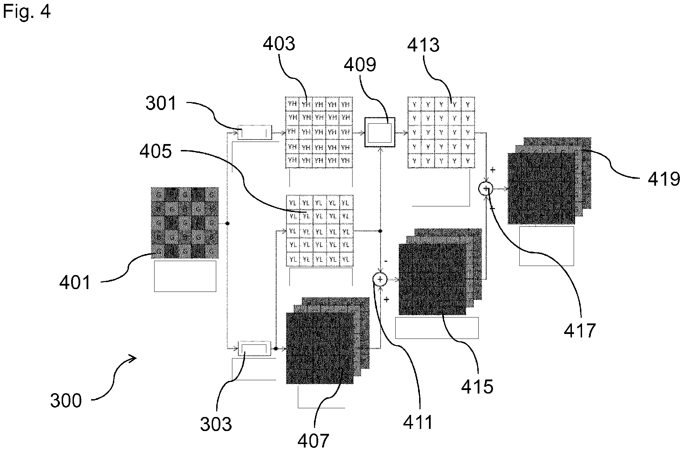

Fig. 4 zeigt ein Verfahren 300 zur Bestimmung von Farbanteilen eines Bildpunktes einer Bayer-Matrix gemäß einer weiteren Ausführungsform. Das Verfahren 300 umfasst die Verfahrensschritte 301, 303, 409, 411 und 417.

Erste Bilddaten 401 liegen in Form einer $5\times5$ Nachbarschaft eines Bildpunktes einer Bayer-Matrix vor. Zum Bestimmen 301 von ersten Luminanzschätzwerten 403 können die ersten Bilddaten 401 mit einer ersten Auflösung gefiltert werden, beispielsweise mittels eines Filters YH_5x5. Hierbei können die ersten Luminanzschätzwerte 403 eine Mehrzahl von Luminanzschätzwerten YH umfassen. Ferner können durch Filtern 303 der ersten Bilddaten 403 mit einer zweiten Auflösung, wobei die erste Auflösung höher als die zweite Auflösung ist, zweite Luminanzschätzwerte 405 und erste Farbanteil-Schätzwerte 407 bestimmt werden, beispielsweise mittels eines Filters YL_5x5. Hierbei können die zweiten Luminanzschätzwerte 405 eine Mehrzahl von Luminanzschätzwerten YL und die ersten Farbanteil-Schätzwerte 407 eine Mehrzahl von Farbanteil-Schätzwerten R', G', B' umfassen.

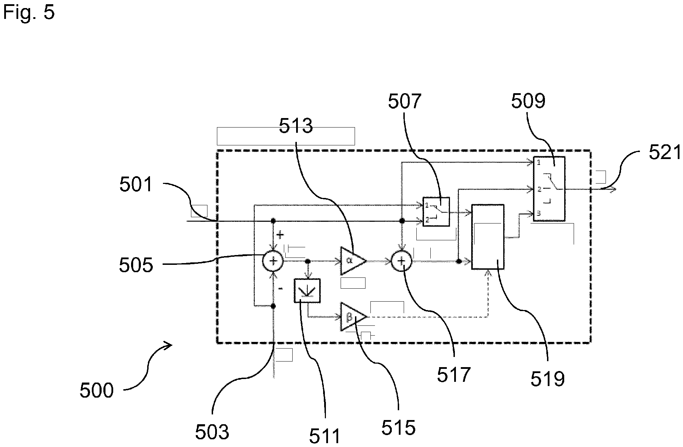

Durch eine Signalverarbeitung 409 können die ersten Luminanzschätzwerte 403 und die zweiten Luminanzschätzwerte 405 zu dritten Luminanzschätzwerten 413 verknüpft werden. Hierbei können die dritten Luminanzschätzwerte 413 eine Mehrzahl von Luminanzwerten Y umfassen. Eine Signalverarbeitungsvorrichtung zur Signalverarbeitung 409 ist in der Fig. 5 gezeigt.

Zum Verknüpfen 411 der zweiten Luminanzschätzwerte 405 mit den ersten Farbanteil-Schätzwerten 407 kann eine Differenzbildung durchgeführt werden, um die Chrominanzschätzwerte 415 zu erhalten. Ferner kann zum Verknüpfen 417 der dritten Luminanzschätzwerte 413 mit den Chrominanzschätzwerten 415 eine Addition durchgeführt werden, um die Farbanteile 419 zu erhalten. Die Farbanteile 419 können eine Mehrzahl von Farbanteilen R, G, B umfassen.

Fig. 5 zeigt eine Signalverarbeitungseinrichtung 500. Die Signalverarbeitungseinrichtung 500 umfasst einen ersten Eingang 501 zum Empfangen des Luminanzschätzwert YH, einen zweiten Eingang 503 zum Empfangen des weiteren Luminanzschätzwert YL und einen Ausgang 521 zum Ausgeben des Luminanzschätzwert $Y_x$, wobei der Parameter x den Modus des ausgegebenen Luminanzschätzwertes bezeichnet.

Die Signalverarbeitungseinrichtung 500 umfasst ferner ein erstes Schaltelement 507, welches mit zwei Schaltpositionen ausgebildet ist, und ein zweites Schaltelement 509, welches mit drei Schaltpositionen ausgebildet ist. Ist das zweite Schaltelement 509 in die Schaltposition 1 geschaltet, so ist der Modus x=0 eingestellt und der Luminanzschätzwert $Y_0$ wird ausgegeben. Ist das zweite Schaltelement 509 ferner in die Schaltposition 2 geschaltet, so ist der Modus x=1 eingestellt und der Luminanzschätzwert $Y_1$ wird ausgegeben. Ist das zweite Schaltelement 509 in die Schaltposition 3 geschaltet und das erste Schaltelement 507 in die Schaltposition 2 geschaltet, so ist der Modus x=2 eingestellt und der Luminanzschätzwert $Y_2$ wird ausgegeben. Ist das zweite Schaltelement 509 in die Schaltposition 3 geschaltet und das erste Schaltelement 507 in die Schaltposition 1 geschaltet, so ist der Modus x=3 eingestellt und der Luminanzschätzwert $Y_3$ wird ausgegeben.

Ferner umfasst die Signalverarbeitungseinrichtung 500 ein erstes Verknüpfungselement 505 zum Erhalten des Differenzwertes $Y_{diff}$, ein erstes Verstärkungselement 513 zum Verstärken des Differenzwertes $Y_{diff}$ um den Parameter $\alpha$, ein zweites Verknüpfungselement 517 zum Erhalten des Luminanzschätzwertes $Y_1$, einen Mischer 519 zum Erhalten der Luminanzschätzwerte $Y_2$ und $Y_3$, sowie ein Bestimmungselement zur Betragsbildung 511 und einem zweiten Verstärkungselement 515, welchem der Parameter $\beta$ als Verstärkungsfaktor zugeordnet ist, zum Erhalten des Steuerwertes MASK.

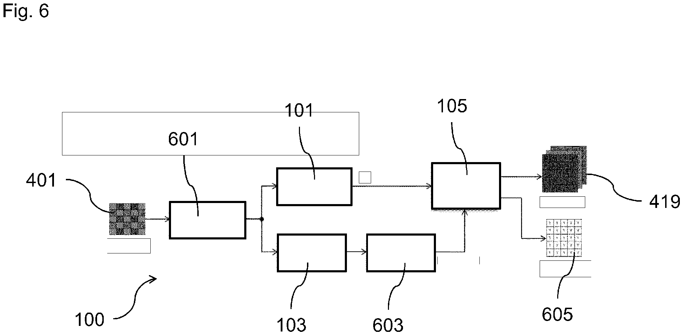

Fig. 6 zeigt eine Vorrichtung 100 zur Bestimmung von Farbanteilen eines Bildpunktes einer Bayer-Matrix gemäß einer weiteren Ausführungsform. Die Vorrichtung 100 umfasst eine Akkumulationseinrichtung 601, einen Filter 101, eine Filterbank 103, eine Multiplexereinrichtung 603 und einen Prozessor 105.

Mittels der Vorrichtung 100 können Farbanteile zu den eingehenden ersten Bilddaten 401 bestimmt werden und Farbanteile 419 und Luminanzwerte 605 bestimmt werden. Die eingehenden ersten Bilddaten 401 bilden hierbei eine $(2n+1) \times (2n+1)$ Nachbarschaft eines Bildpunktes, wobei n 2 beträgt. Die Akkumulationseinrichtung 601 kann zum Akkumulieren der $(2n+1) \times (2n+1)$ Nachbarschaft des Bildpunktes auf eine $(n+1) \times (n+1)$ Akkumulationsmatrix ausgebildet sein. Ferner kann die Multiplexereinrichtung 603 zum farbkanalabhängigen Bestimmen der Farbanteil-Schätzwerte ausgebildet sein. Gemäß einer Ausführungsform kann die Multiplexereinrichtung 603 in der Filterbank 103 oder dem Prozessor 105 integriert sein.

Die Akkumulationseinrichtung 601 kann einen Prozessor umfassen oder durch einen Prozessor gebildet sein.

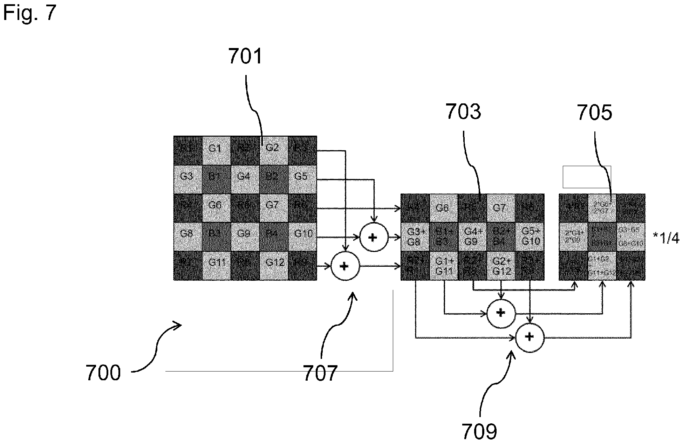

Fig. 7 zeigt ein Verfahren 700 zur Akkumulation von Bildpunkten. Das Verfahren 700 umfasst die Verfahrensschritte 707 und 709.

Die Bildpunktdaten einer $5 \times 5$ Nachbarschaft 701 können durch Verknüpfen 707 zu einer Zwischenmatrix 703 akkumuliert werden. Ferner kann die Zwischenmatrix 703 durch weiteres Verknüpfen 709 zu einer Akkumulationsmatrix 705 akkumuliert werden. Das Verfahren 700 kann analog für alle Farbkanäle bzw. Bayer-Phasen durchgeführt werden. Im Falle eines roten Zentralpunktes entspricht die Akkumulationsmatrix 705 der Akkumulationsmatrix Acclm. Das Verfahren 700 kann ferner mittels der Akkumulationseinrichtung 601 ausgeführt werden.

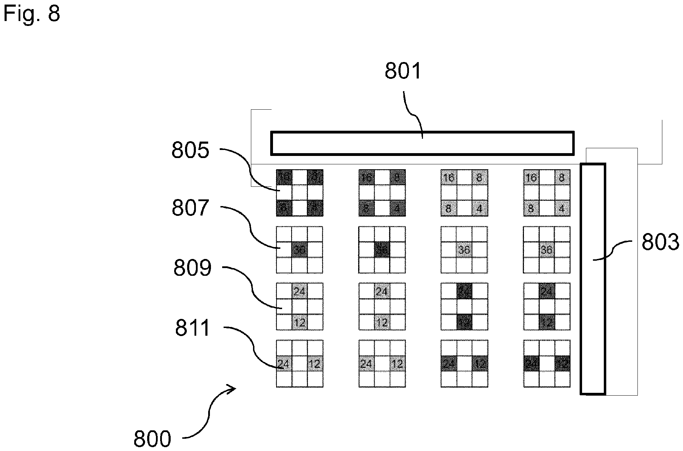

Fig. 8 zeigt ein Verfahren 800 zum farbkanalabhängigen Bestimmen von Farbanteil-Schätzwerten. Das Verfahren 800 umfasst ein farbkanalabhängiges Filtern eines Eingangssignals 801 mittels der jeweiligen Matrizen 805, 807, 809, 811, um ein Ausgangssignal 803 zu erhalten. Das Ausgangssignal 803 kann einen Ausgangswert für jede Filterung mittels einer der Matrizen 805, 807, 809, 811 umfassen. Beispielsweise umfasst das Ausgangssignal die Werte A1, A2, A3 und A4.

Das Ausgangssignal 803 kann in Abhängigkeit von dem Farbkanal des Eingangssignals 801 ausgewertet werden.

Ist der Farbkanal des Eingangssignals 801 R, so kann die erste Spalte verwendet werden. Hierbei entspricht die erste Matrix 805 einer Filterung zum Bestimmen des Farbanteil-Schätzwertes R', die zweite Matrix 807 einer Filterung zum Bestimmen des Farbanteil-Schätzwertes B' und die dritte Matrix 809 und die vierte Matrix 811 einer Filterung zum Bestimmen des Farbanteil-Schätzwertes G'.

Ist der Farbkanal des Eingangssignals 801 B, so kann die zweite Spalte verwendet werden. Hierbei entspricht die erste Matrix 805 einer Filterung zum Bestimmen des Farbanteil-Schätzwertes B', die zweite Matrix 807 einer Filterung zum Bestimmen des Farbanteil-Schätzwertes R' und die dritte Matrix 809 und die vierte Matrix 811 einer Filterung zum Bestimmen des Farbanteil-Schätzwertes G'.

Ist der Farbkanal des Eingangssignals 801 Gr, so kann die dritte Spalte verwendet werden. Hierbei entspricht die vierte Matrix 811 einer Filterung zum Bestimmen des Farbanteil-Schätzwertes B', die dritte Matrix 809 einer Filterung zum Bestimmen des Farbanteil-Schätzwertes R' und die erste Matrix 805 und die zweite Matrix 807 einer Filterung zum Bestimmen des Farbanteil-Schätzwertes G'.

Ist der Farbkanal des Eingangssignals 801 Gb, so kann die vierte Spalte verwendet werden. Hierbei entspricht die vierte Matrix 811 einer Filterung zum Bestimmen des Farbanteil-Schätzwertes R', die dritte Matrix 809 einer Filterung zum Bestimmen des Farbanteil-Schätzwertes B' und die erste Matrix 805 und die zweite Matrix 807 einer Filterung zum Bestimmen des Farbanteil-Schätzwertes G'.

Das Verfahren 800 kann mittels der Filterbank 103 ausgeführt werden. Ferner kann die erste Matrix 805 der Matrix L1, die zweite Matrix 807 der Matrix L2, die dritte Matrix 809 der Matrix L3 und die vierte Matrix 811 der Matrix L4 entsprechen.

Gemäß einer Ausführungsform können zur Bestimmung von Farbanteilen eines Bildpunktes oder zum Demosaicing bzw. zur Umrechnung von Farb-Bilddaten, die aus einem Color-Filter-Array (CFA) Bild oder einer Bayer-Matrix bzw. einem Bayer-Pattern stammen, rote, grüne und blaue Signalanteile für alle Pixelpositionen des Bildsensors interpoliert werden. Gemäß einer weiteren Ausführungsform können zur Bestimmung von Farbanteilen R, G, B eines Bildpunktes oder zur Interpolation der drei Farbanteile an einer bestimmten Pixelposition Nachbarpixel aus einer 5x5 Pixelumgebung verwendet werden.

Gemäß einer weiteren Ausführungsform kann das Verfahren 300 auf einer separaten Verarbeitung von Helligkeits- bzw. Luminanz- und Farbdifferenz- bzw. Chrominanz-Signalanteilen basieren. Dazu kann die Bayer-Matrix mit zwei verschiedenen Tiefpassfiltern, wie YH_5x5 und YL_5x5, gefiltert werden. Mittels der Filtermatrix YH_5x5 kann ein Luminanzschätzwert YH für alle Pixelpositionen erzeugt werden, um ein hochaufgelöstes Monochrombild zu erhalten. Mittels der Filterbankmatrix YL_5x5 können Farbanteil-Schätzwerte R', G', B' und ein weiterer Luminanzschätzwert YL für alle Pixelpositionen erzeugt werden, um ein niedrig aufgelöstes Farbbild und ein niedrig aufgelöstes Monochrombild zu erhalten. Gemäß einer weiteren Ausführungsform können Farbdifferenzanteile durch eine pixelweise Subtraktion der Farbanteil-Schätzwerte R', G', B' und des weiteren Luminanzschätzwertes YL bestimmt werden. Damit können für jede Pixelposition reine Chrominanzinformationen, beispielsweise ohne Helligkeitskomponente, bereitgestellt werden.

Gemäß einer weiteren Ausführungsform kann eine Addition von Farbdifferenzanteilen mit dem hochaufgelösten Luminanzschätzwert YH der reinen Chrominanzinformation wieder eine Helligkeitskomponente hinzufügen. Hierdurch können Detailinformationen und die Bildschärfe im entstandenen Farbbild oder Farbsignal erhöht werden. Auf diese Weise können Farbanteile R, G, B mit hoher Auflösung für alle Bildpunktpositionen oder Pixelpositionen erzeugt werden. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Vorrichtung (100) zur Bestimmung von Farbanteilen (R, G, B) eines Bildpunktes einer Bayer-Matrix, mit:

   einem Filter (101) zum Bestimmen eines Luminanzschätzwertes (YH) des Bildpunktes durch Filterung, wobei der Bildpunkt der Zentralpixel einer (2n+1) x (2n+1) Nachbarschaft ist und die Filtermatrix eine (2n+ 1) x (2n+ 1) Matrix ist; einer Filterbank (103) zum Filtern der Bayer-Matrix, wobei der Bildpunkt der Zentralpixel einer (n+1)x (n+1) Nachbarschaft ist, und wobei die Filtermatrizen der Filterbank (n+ 1) x (n+ 1) Matrizen sind, um für jeden Farbkanal einen Farbanteil-Schätzwert (R', G', B') des Bildpunktes zu erhalten, und
   einem Prozessor (105) zum Verknüpfen der Farbanteil-Schätzwerte (R', G', B') mit dem Luminanzschätzwert (YH), um für jeden Farbkanal einen Farbanteil (R, G, B) des Bildpunktes zu erhalten, wobei der Prozessor (105) ferner ausgebildet ist, die Farbanteil-Schätzwerte (R', G', B') zu einem weiteren Luminanzschätzwert (YL) zu akkumulieren und eine Differenz des Luminanzschätzwertes (YH) und des weiteren Luminanzschätzwertes (YL) mit zumindest einem Farbanteil- Schätzwert (R',G',B') des Bildpunktes zu verknüpfen, um eine Bildkantenanschärfung zu bewirken.

2. Vorrichtung (100) nach Anspruch 1, wobei der Prozessor (105) ausgebildet ist, auf Basis der genannten Differenz einen Steuerwert für eine adaptive Bildkantentanschärfung zu bestimmen und durch den Steuerwert für eine adaptive Bildkantentanschärfung den Luminanzschätzwert (YH) mit dem weiteren Luminanzschätzwert (YL) zu verknüpfen, um eine adaptive Bildkantentanschärfung zu bewirken.

3. Vorrichtung (100) nach Anspruch 1, wobei der Prozessor (105) ausgebildet ist, auf Basis der genannten Differenz einen Steuerwert für eine adaptive Bildkantentanschärfung mit einer Rauschunterdrückung zu bestimmen und durch den Steuerwert für eine adaptive Bildkantentanschärfung mit einer Rauschunterdrückung den Luminanzschätzwert (YH) mit dem weiteren Luminanzschätzwert (YL) zu verknüpfen, um eine adaptive Bildkantentanschärfung mit einer Rauschunterdrückung zu bewirken.

4. Vorrichtung (100) nach einem der vorstehenden Ansprüche, wobei n eine ganze Zahl ist.

5. Vorrichtung (100) nach Anspruch 4, mit einer Akkumulationseinrichtung (601) zum Akkumulieren der (2n+1)×(2n+1) Nachbarschaft des Bildpunktes auf eine (n+1)×(n+1) Akkumulationsmatrix (705).

6. Vorrichtung (100) nach einem der vorstehenden Ansprüche, wobei der Filter (101) zum Durchführen einer Filteroperation auf der Basis der Filtermatrix

$$YH\_5x5 = \begin{bmatrix} -56 & -512 & -928 & -512 & -56 \\ -512 & 1060 & 3152 & 1060 & -512 \\ -928 & 3152 & 8192 & 3152 & -928 \\ -512 & 1060 & 3152 & 1060 & -512 \\ -56 & -512 & -928 & -512 & -56 \end{bmatrix}$$

ausgebildet ist.

7. Vorrichtung (100) nach Anspruch 5, wobei der Filter (101) zum Durchführen einer Filteroperation auf der Basis der weiteren Filtermatrix

$$YH\_3x3 = \begin{bmatrix} 8192 & 6304 & -1856 \\ 6304 & 4240 & -2048 \\ -1856 & -2048 & -224 \end{bmatrix}$$

ausgebildet ist.

8. Vorrichtung (100) nach einem der vorstehenden Ansprüche, wobei die Filterbank (103) zum Durchführen einer Filteroperation auf der Basis der Filterbankmatrix

$$YL\_3x3 = \begin{bmatrix} 16 & 24 & 8 \\ 24 & 36 & 12 \\ 8 & 12 & 4 \end{bmatrix}$$

ausgebildet ist.

9. Vorrichtung (100) nach einem der vorstehenden Ansprüche, wobei die Filterbank (103) eine Multiplexereinrichtung (603) zum farbkanalabhängigen Bestimmen der Farbanteil-Schätzwerte (R', G', B') aus einem Ergebnis der Filterung umfasst.

10. Bildkamera (200), mit einem Bayer-Sensor (201) und einer Vorrichtung (100) nach einem der Ansprüche 1 bis 9, wobei der Bayer-Sensor (201) ausgebildet ist, Bilddaten in Form einer Bayer-Matrix zu erfassen, und wobei die Vorrichtung (100) ausgebildet ist, Farbanteile (R, G, B) eines Bildpunktes oder mehrerer Bildpunkte der Bayer-Matrix zu bestimmen.

11. Verfahren (300) zur Bestimmung von Farbanteilen (R, G, B) eines Bildpunktes einer Bayer-Matrix, mit folgenden Schritten:

Bestimmen (301) eines Luminanzschätzwertes (YH) des Bildpunktes durch Filterung, wobei der Bildpunkt der Zentralpixel einer (2n+1) x (2n+1) Nachbarschaft ist und die Filtermatrix eine (2n+1) x (2n+1) Matrix ist;
Filtern (303) der Bayer-Matrix, wobei der Bildpunkt der Zentralpixel einer (n+1) x (n+1) Nachbarschaft ist, und wobei die Filtermatrizen der Filterbank (n+ 1) x (n+ 1) Matrizen sind, um für jeden Farbkanal einen Farbanteil-Schätzwert (R', G', B') des Bildpunktes zu erhalten, und
Verknüpfen (305) der Farbanteil-Schätzwerte (R', G', B') mit dem Luminanzschätzwert (YH), um für jeden Farbkanal einen Farbanteil (R, G, B) des Bildpunktes zu erhalten, wobei das Verfahren ferner ausgebildet ist mit:

Akkumulieren der Farbanteil-Schätzwerte (R', G', B') zu einem weiteren Luminanzschätzwert (YL); und
Verknüpfen einer Differenz des Luminanzschätzwertes (YH) und des weiteren Luminanzschätzwertes (YL) mit zumindest einem Farbanteil- Schätzwert (R', G', B') des Bildpunktes, um eine Kantentanschärfung zu bewirken.

12. Verfahren (300) nach Anspruch 11 mit folgenden Schritten:

Bestimmen eines Steuerwertes für eine adaptive Kantenanschärfung auf Basis der genannten Differenz; und
Verknüpfen des Luminanzschätzwertes (YH) und des weiteren Luminanzschätzwertes (YL) durch den Steuerwert für die adaptive Kantenanschärfung, um eine adaptive Kantenanschärfung zu bewirken.

13. Verfahren (300) nach Anspruch 11 mit folgenden Schritten:

Bestimmen eines Steuerwertes für eine adaptive Kantenanschärfung mit einer Rauschunterdrückung auf Basis der genannten Differenz und
Verknüpfen des Luminanzschätzwertes (YH) und des weiteren Luminanzschätzwertes (YL) durch den Steuerwert für eine adaptive Kantenanschärfung mit einer Rauschunterdrückung, um eine adaptive Kantenanschärfung mit einer Rauschunterdrückung zu bewirken.

**Claims**

1. A device (100) for determining color components (R, G, B) of an image point of a Bayer matrix, comprising:

   a filter (101) for determining a luminance estimate (YH) of the image point by filtering, wherein the image point is the central pixel of a (2n+1) x (2n+ 1) neighborhood and the filter matrix is a (2n+1) x (2n+1) matrix;
   a filter bank (103) for filtering the Bayer matrix, wherein the image point is the central pixel of a (n+1) x (n+1) neighborhood, and wherein the filter matrices of the filter bank are (n+ 1) x (n+ 1) matrices, in order to obtain a color component estimated value (R', G', B') of the image point for each color channel; and
   a processor (105) for linking the color component estimated values (R', G', B') to the luminance estimated value (YH) in order to obtain a color component (R, G, B) of the image point for each color channel, wherein the processor (105) is further configured to accumulate the color component estimated values (R', G', B') for a further luminance estimated value (YL) and to link a difference of the luminance estimated value (YH) and the further luminance estimated value (YL) to at least one color component estimated value (R', G', B') of the image point in order to effect an image edge sharpening.

2. The device (100) as recited in Claim 1, wherein the processor (105) is configured to determine on the basis of the mentioned difference a control value for an adaptive image edge sharpening and to link by means of the control value for an adaptive image edge sharpening the luminance estimated value (YH) to the further luminance estimated value (YL) in order to effect an adaptive image edge sharpening.

3. The device (100) as recited in Claim 1, wherein the processor (105) is configured to determine on the basis of the mentioned difference a control value for an adaptive image edge sharpening having a noise suppression and to link by means of the control value for an adaptive image edge sharpening having a noise suppression the luminance estimated value (YH) to the further luminance estimated value (YL) in order to effect an adaptive image edge sharpening having a noise suppression.

4. The device (100) as recited in one of the preceding claims, wherein n is an integer.

5. The device (100) as recited in Claim 4, having an accumulation device (601) for accumulating the $(2n+1) \times (2n+1)$ neighborhood of the image point on a $(n+1) \times (n+1)$ accumulation matrix (705).

6. The device (100) as recited in one of the preceding claims, wherein the filter (101) for carrying out a filter operation is configured on the basis of

$$YH\_5x5 = \begin{bmatrix} -56 & -512 & -928 & -512 & -56 \\ -512 & 1060 & 3152 & 1060 & -512 \\ -928 & 3152 & 8192 & 3152 & -928 \\ -512 & 1060 & 3152 & 1060 & -512 \\ -56 & -512 & -928 & -512 & -56 \end{bmatrix}$$

the filter matrix.

7. The device (100) as recited in Claim 5, wherein the filter (101) for carrying out a filter operation is configured on the basis of

$$YH\_3x3 = \begin{bmatrix} 8192 & 6304 & -1856 \\ 6304 & 4240 & -2048 \\ -1856 & -2048 & -224 \end{bmatrix}$$

the further filter matrix.

8. The device (100) as recited in one of the preceding claims, wherein the filter bank (103) for carrying out a filter operation is configured on the basis of

$$YL\_3x3 = \begin{bmatrix} 16 & 24 & 8 \\ 24 & 36 & 12 \\ 8 & 12 & 4 \end{bmatrix}$$

the filter bank matrix.

9. The device (100) as recited in one of the preceding claims, wherein the filter bank (103) comprises a multiplexing device (603) to determine the color component estimated values (R', G', B') as a function of the color channels from a result of the filtering.

10. An image camera (200) having a Bayer sensor (201), and a device (100) as recited in one of Claims 1 through 9, wherein the Bayer sensor (201) is configured to detect image data in the form of a Bayer matrix, and wherein the device (100) is configured to determine color components (R, G, B) of an image point or a plurality of image points of the Bayer matrix.

11. A method (300) for determining color components (R, G, B) of an image point of a Bayer matrix, comprising the following steps:

determining (301) a luminance estimated value (YH) of the image point by filtering, wherein the image point is the central pixel of a (2n+1) x (2n+1) neighborhood and the filter matrix is a (2n+1) x (2n+1) matrix; filtering (303) the Bayer matrix, wherein the image point is the central pixel of an (n+1) x (n+1) neighborhood, and wherein the filter matrices of the filter bank are (n+1) x (n+ 1) matrices, in order to obtain a color component estimated value (R', G', B') of the image point for each color channel; and linking (305) the color component estimated values (R', G', B') to the luminance estimated value (YH) in order to obtain a color component (R, G, B) of the image point for each color channel, wherein the method is furthermore configured by:

accumulating the color component estimated values (R', G', B') to a further luminance estimated value (YL); and linking a difference of the luminance estimated value (YH) and the further luminance estimated value (YL) to at least one color component estimated value (R', G', B') of the image point in order to effect an edge sharpening.

12. The method (300) as recited in Claim 11 comprising the following steps:

determining a control value for an adaptive edge sharpening on the basis of the mentioned difference; and linking the luminance estimated value (YH) and the further luminance estimated value (YL) by means of the control value for the adaptive edge sharpening in order to effect an adaptive edge sharpening.

13. The method (300) as recited in Claim 11 comprising the following steps:

Determining a control value for an adaptive edge sharpening having a noise suppression on the basis of the mentioned difference; and linking the luminance estimated value (YH) and the further luminance estimated value (YL) by means of the control value for an adaptive edge sharpening having a noise suppression in order to effect an adaptive edge sharpening having a noise suppression.

**Revendications**

1. Dispositif (100) destiné à déterminer les chrominances (R, V, B) d'un pixel d'une matrice de Bayer, comportant :

un filtre (101) destiné à déterminer une luminance estimée (YH) du pixel par filtrage, ce pixel constituant le pixel central d'un voisinage de (2n+1) x (2n+ 1) et la matrice du filtre constituant une matrice de (2n+1) x (2n+ 1) ; un banc de filtre (103) destiné à filtrer la matrice de Bayer, le pixel constituant le pixel central d'un voisinage de (2n+1) x (2n+1), et les matrices de filtres constituant les matrices de banc de filtre (n+ 1) x (n+ 1), afin d'obtenir pour chaque canal chromatique une chrominance estimée (R', V', B') du pixel et

un processeur (105) destiné à mettre en relation les chrominances estimées (R', V', B') avec la luminance estimée (YH), afin d'obtenir pour chaque canal chromatique une chrominance (R, G, B) du pixel, le processeur (105) étant par ailleurs conçu pour accumuler les chrominances estimées (R', V', B') en une luminance estimée supplémentaire (YL), et à mettre en relation une différence entre la luminance estimée (YH) et la chrominance estimée supplémentaire (YL) avec au moins une chrominance estimée (R', V', B') du pixel afin de générer un renforcement des bords de l'image.

2.  Dispositif (100) selon la revendication 1, le processeur (105) étant conçu, sur la base de la différence indiquée, en vue de déterminer une valeur de contrôle pour un renforcement adaptatif des bords de l'image et, par cette valeur de contrôle de renforcement adaptatif des bords de l'image, de mettre en relation la luminance estimée (YH) avec la luminance estimée supplémentaire (YL) afin de générer un renforcement adaptatif des bords de l'image.

3.  Dispositif (100) selon la revendication 1, le processeur (105) étant conçu, sur la base de la différence indiquée, en vue de déterminer une valeur de contrôle pour un renforcement adaptatif des bords de l'image avec une réduction du bruit et, par cette valeur de contrôle de renforcement adaptatif des bords de l'image avec une réduction du bruit, de mettre en relation la luminance estimée (YH) avec la luminance estimée supplémentaire (YL) afin de générer un renforcement adaptatif des bords de l'image avec une réduction du bruit.

4.  Dispositif (100) selon l'une des revendications précédentes, n étant un nombre entier.

5.  Dispositif (100) selon la revendication 4, avec un système d'accumulation (601) destiné à accumuler le voisinage de (2n+1) x (2n+1) du pixel sur une matrice d'accumulation de $(n+1) \times (n+1)$ (705).

6.  Dispositif (100) selon l'une des revendications précédentes, le filtre (101) étant conçu pour effectuer une opération de filtrage sur la base de la matrice de filtre suivante :

$$YH\_5x5 = \begin{bmatrix} -56 & -512 & -928 & -512 & -56 \\ -512 & 1060 & 3152 & 1060 & -512 \\ -928 & 3152 & 8192 & 3152 & -928 \\ -512 & 1060 & 3152 & 1060 & -512 \\ -56 & -512 & -928 & -512 & -56 \end{bmatrix}$$

7.  Dispositif (100) selon la revendication 5, le filtre (101) étant conçu pour effectuer une opération de filtrage sur la base de la matrice de filtre supplémentaire suivante :

$$YH\_3x3 = \begin{bmatrix} 8192 & 6304 & -1856 \\ 6304 & 4240 & -2048 \\ -1856 & -2048 & -224 \end{bmatrix}$$

8.  Dispositif (100) selon l'une des revendications précédentes, le filtre (103) étant conçu pour effectuer une opération de filtrage sur la base de la matrice de filtre suivante :

$$YL\_3x3 = \begin{bmatrix} 16 & 24 & 8 \\ 24 & 36 & 12 \\ 8 & 12 & 4 \end{bmatrix}$$

9.  Dispositif (100) selon l'une des revendications précédentes, le filtre (103) comportant un système multiplex (603) destiné à déterminer, en fonction du canal chromatique, les chrominances estimées (R', V', B') à partir d'un résultat du filtrage.

10. Caméra d'imagerie (200), équipée d'un capteur de Bayer (201) et d'un dispositif (100) selon l'une des revendications 1 à 9, le capteur de Bayer (201) étant conçu pour l'acquisition de données d'image sous forme de matrice de Bayer, et le dispositif (100) étant conçu pour déterminer les chrominances (R, V, B) d'un pixel ou de plusieurs pixels de la matrice de Bayer.

**11.** Dispositif (300) destiné à déterminer les chrominances (R, V, B) d'un pixel d'une matrice de Bayer, et comportant les étapes suivantes :

la détermination (301) d'une luminance estimée (YH) du pixel par filtrage, ce pixel constituant le pixel central d'un voisinage de (2n+1) x (2n+1) et la matrice du filtre constituant une matrice de (2n+1) x (2n+ 1) ;
le filtrage (303) de la matrice de Bayer, le pixel constituant le pixel central d'un voisinage de (2n+1) x (2n+1), et les matrices de filtres constituant les matrices de banc de filtre (n+1) x (n+1), afin d'obtenir pour chaque canal chromatique une chrominance estimée (R', V', B'), et
la mise en relation (305) des chrominances estimées (R', V', B') avec la luminance estimée (YH), afin d'obtenir pour chaque canal chromatique une chrominance estimée (R', V', B'),
le procédé comprenant par ailleurs :

l'accumulation des chrominances estimées (R', V', B') en une luminance estimée supplémentaire (YL) ; et
la mise en relation d'une différence entre la luminance estimée (YH) et la chrominance estimée supplémentaire (YL) avec au moins une chrominance estimée (R', V', B') du pixel, afin de générer un renforcement des bords.

**12.** Dispositif (300) selon la revendication 11, comportant les étapes suivantes :

la détermination d'une valeur de contrôle pour un renforcement adaptatif des bords de l'image sur la base de la différence indiquée ; et
la mise en relation de la luminance estimée (YH) et de la luminance estimée supplémentaire (YL) par la valeur de contrôle du renforcement adaptatif des bords afin de générer un renforcement adaptatif des bords.

**13.** Dispositif (300) selon la revendication 11, comportant les étapes suivantes :

la détermination d'une valeur de contrôle pour un renforcement adaptatif des bords de l'image avec une réduction du bruit sur la base de la différence indiquée et
la mise en relation de la luminance estimée (YH) et de la luminance estimée supplémentaire (YL) par la valeur de contrôle du renforcement adaptatif des bords avec une réduction du bruit afin de générer un renforcement adaptatif des bords avec une réduction du bruit.

Fig. 1

Fig. 2

Fig. 3

Fig. 4

EP 2 955 691 B1

Fig. 5

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. LOSSON et al.** Comparison of color demosaicing methods. *Advances in Imaging and Electron Physics,* 2010, vol. 162, 173-265

- **ZHANG XINGYU.** Joint Denoising and demosaicking of noisy CFA images based on inter-color correlation. Hong Kong University of Science and Technology
- **JOHANNES HERWIG.** *Regularized Color Demosaicing via Luminance Approximation*